Europäisches Patentamt

European Patent Office

Office européen des brevets

(11) Publication number: **0 093 459**
A1

## EUROPEAN PATENT APPLICATION

(21) Application number: 83200347.9

(22) Date of filing: 12.03.83

(51) Int. Cl.³: **A 01 G 9/14**
A 01 G 31/02

(30) Priority: 18.03.82 NL 8201120

(43) Date of publication of application:
09.11.83 Bulletin 83/45

(84) Designated Contracting States:
AT BE CH DE FR GB IT LI LU NL SE

(71) Applicant: Schulte & Lestraden B.V.
Parklaan 156
NL-2171 EK Sassenheim(NL)

(72) Inventor: Lestraden, Jacobus Wilhelmus
Nachtegaallaan 4
NL-2172 JR Sassenheim(NL)

(74) Representative: Noz, Franciscus Xaverius, Ir. et al,
Boschdijk 155 P.O. Box 645
NL-5600 AP Eindhoven(NL)

(54) Method and device for cultivating plants.

(57) A method of growing plants in closed spaces in which the plants are arranged in superposed layers and are exposed to artificial light sources (8) whereby the root balls or tubers of the fruit-bearing plants are supported in holders (4) containing a natural or artificial nutrient source, the disposition of the holders being such that the branches of the plants are guided at the side of the holders and at least substantially in a horizontal direction along guide members.

FIG. 1.

-1-

Method and device for cultivating plants.

The invention relates to a method of cultivating plants in closed rooms, the plants being arranged in superposed layers and being exposed to artifical light sources.

It has been proposed to grow seedlings or small plants in closed spaces in stands in superposed beds, in which the plants are illuminated by artifical light sources. Many fruit-bearing plants such as tomatoes, cucumbers, strawberries and the like are, however, still grown in greenhouses and/or in the open air, in which case in dependence on the nature of the plants, the fruit-bearing branches are bearing on the ground or are guided upwards along poles or wires or the like. Growing in the open air is fully dependent on climatic conditions. This applies to a lesser extent to growing in greenhouses, but even then a satisfactory control of the climat is only possible to a limited extent at the expens of much energy.

The invention has for its object to provide a method in which fruit-bearing plants also can be cultivated in closed spaces in an economic and effective manner under artificial light.

According to the invention this can be achieved in that the root balls or tubers of the fruit-bearing plants are supported in a holder containing a natural or artificial nutrient source, the disposition of the holders being such that the branches of the plants are guided at the side of the holders and at least substantially in a horizontal direction along guide members. Consequently the branches of the plants can freely extend away from the holders, whilst the branches can be guided in an at least substantially horizontal direction  along the guide members so that efficient use of the available space can be obtained.

By using the method embodying the invention the plants can be grown in  large numbers in at least substantially horizontal layers in superposition in spaces in which optimum climatic conditions are prevailing so that a particularly good product can be obtained. In addition harvesting of the fruit can be readily performed between the superposed layers, particularly because the fruits tends to hang down by gravity from the branches, whereas the plant leaves tend to extend towards the light sources arranged above the plants so that during growth so to say automatically separation between leaves and fruit is performed.

According to the invention a particularly efficient device for carrying out the above-mentioned method, comprising a stand in which light sources are arranged at equal intervals one above the other, comprises carriers forming an open structure at different levels in the stand, each carrier being connected with at least cne holder for receiving a plant.

The invention will now be described more fully with reference to a few embodiments of a device in accordance with the invention shown schematically in the accompanying Figures.

Fig.  1 is a schematic elevational view of part of a stand which may be disposed in a closed room.

Fig. 2 is an elevational view of a number of carriers arranged side by side in the stand in the direction of the arrow II in Fig. 1.

Fig. 3 is an enlarged sectional view of a carrier taken on the line III-III in Fig. 1.

Fig. 4 is a plan view of a number of carriers in a further embodiment of the invention.

When using the method embodying the invention the cultivation of plants takes place in closed cells in which the climat can be controlled by regulating the temperature, the humidity, the air refreshment and the like.

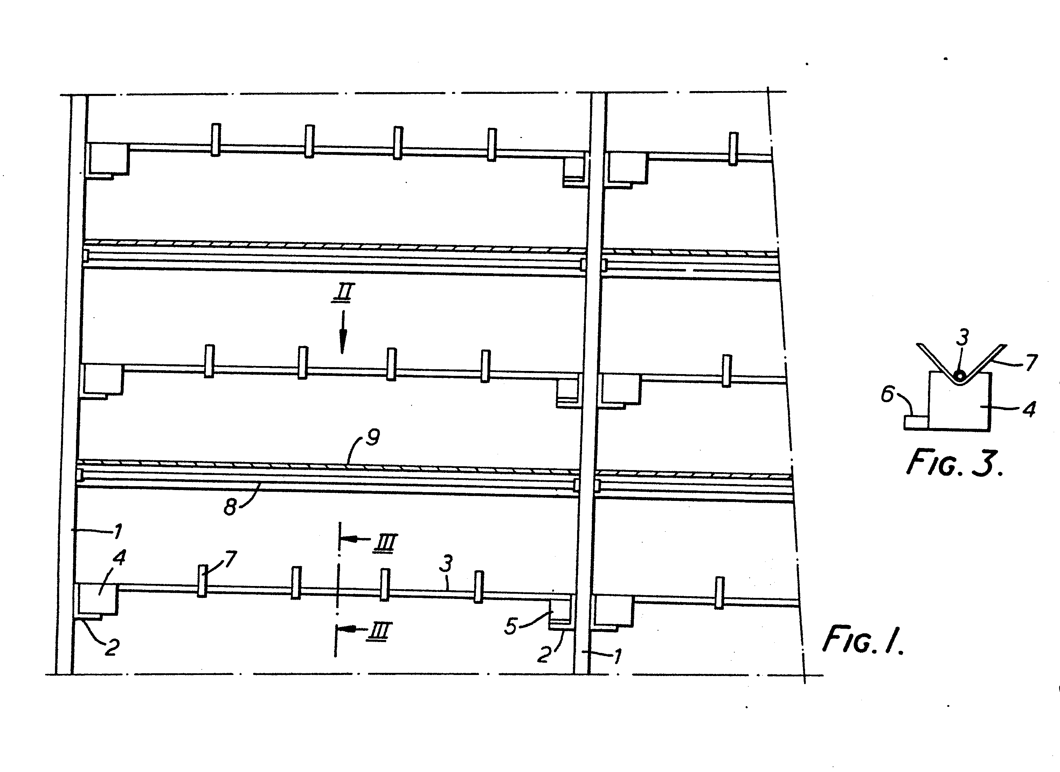

The stand shown in Fig. 1 comprises a plurality of vertical columns 1 serving to support angle-section irons 2 arranged at equal intervals one above the other so that the horizontal limbs of two opposite angle-section irons invariably directed towards one another as will be apparent from Fig. 1.

At the height of each set of angle-section irons located at the same level carriers 3 formed by rods are arranged at right angles to the direction of length of the angle-section irons 2, said carriers being fastened at one end to a holder 4 bearing on an angle section iron and at the other end to a support 5 bearing on the other angle-section iron.

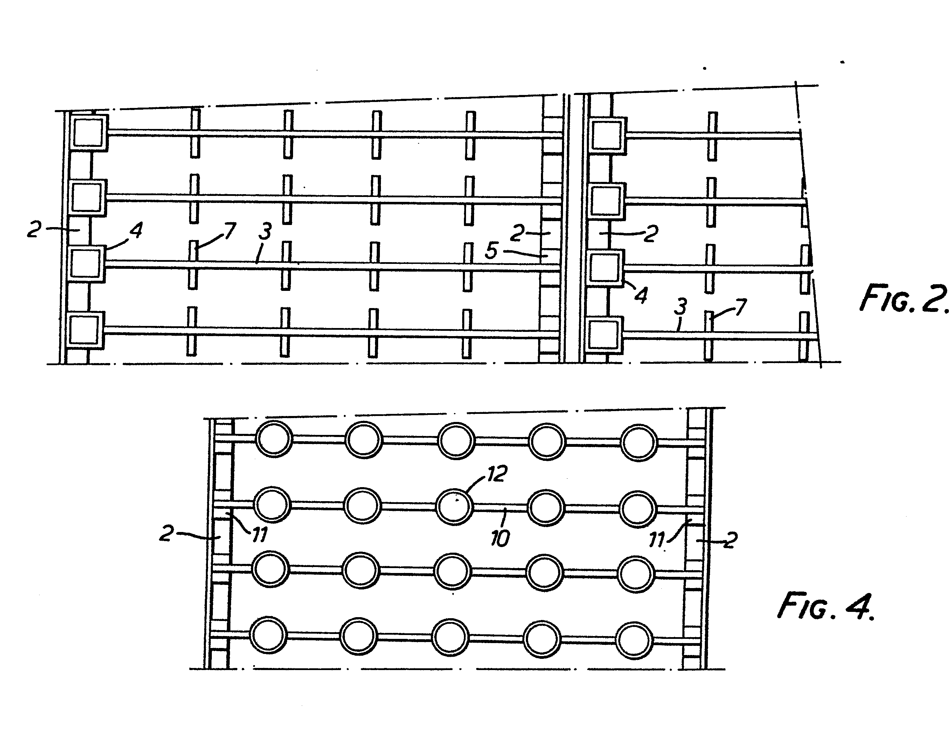

It is shown in Fig. 3 that the holder may be provided with a connection stub 6 for connecting a duct for the supply of water containing or not containing nutrients. From Fig. 3 it will be particularly apparent that the carrier 3 has fastened to it at equal intervals V-shaped strips or supports 7.

It is furthermore shown in Fig. 1 that light sources, for example, formed by tubular lamps 8 are arranged between the superposed layers of adjacent carriers 3, above which sources reflecting hoods 9 may be arranged.

The embodiment described above is particularly suitable for growing fruit-bearing plants such as tomatoes, cucumbers or the like. The root ball of the plant concerned may be accommodated in the holder 4 which contains a natural or artificial nutrient source. The branches of the plant will grow in a horizontal direction by gravity, whilst they can be guided along the carrier 3 adjoining the holder 4 concerned. The upwardly extending wings 7 prevent the branches from slipping off the carrier 3.

The leaf of the plant tends to get upright towards the light source, whereas by gravity the fruit will hang down so that so to say automatically a separation between leaf and fruit is obtained, which will materially facilitate harvesting of the fruit.

The carriers 3 are preferably detachably connected with the holders 4. It is thus possible to arrange the holders 4 close to one another in a cell for the first growth of the plants until the plants have reached a given growth, after which the carriers 3 with the holders 4 can be arranged as assemblies in the manner shown in Figs. 1 and 2 in suitable racks.

The distance between the holders 4 and the carrier 3 in a horizontal direction (Fig. 2) can also be adapted to the kind and growth of the plants; for example, in the first stage of growth the carriers may be arranged relatively closely to one another, whereas in a further phase of growth the distance between the carriers is enlarged and a number of carriers can be removed from the rack concerned and arranged in a further rack.

With some crops the zone comprising the fruit to be harvested may gradually shift in a direction away from the root ball. When using the device and method described above the following procedure may be carried with such plants. The plant growing in the holder 4 connected with the carrier 3 will be guided along the carrier 3 and the zone comprising the fruit to be harvested will shift, so to say, along the carrier 3 to the right, viewed in Fig. 1. When this zone has arrived at a given distance from the holder 4, a new holder 4 with a  young plant can be disposed at the side of the carrier and the branches can again be guided along the carrier 3. The fruit of the young plant will ripen first in a zone located near the carrier holder 4, whereas the fruit of the older plant ripens in a zone at a larger distance from the holders 4. This can be continued and after some time the oldest plant may be removed and replaced by a young plant so that so to say throughout the length of the carrier fruit can be harvested. This can also be ensured by working in closed cells in which the climatic conditions can be maintained at an optimum.

For those cases in which the fruit-bearing plants have relatively small branches, for example, strawberry plants or the like the carriers 10 shown in Fig. 4 can be used, which carriers are provided at their ends with supports 11 for holding the carriers on the angle-section irons 2. To the carriers 10 are fastened at equal intervals holders 12 containing a natural or artificial nutrient source for the root balls of the plants. The plants can be placed in these holders and the branches of the plants will hang down from the outer circumference of the holders.

Preferably the holders are arranged on the carriers in a manner such that the distance between the holders is adjustable, whilst the holders 12 can be readily disengaged from the carriers 10 so that invariably an optimum distance between the holders can be ensured in dependence on the growth of the plants. Also in this case the fruit can be readily harvested since the fruit-bearing branches are freely hanging down and are, therefore, readily accessible.

By using the method and device specified above the culture of fruit-bearing plants such as tomatoes, cucumbers, grapes, strawberries can be performed in an optimum manner in closed and, as the case may be, isolated spaces in which an optimum climate can be maintained at minimum costs, whilst the whole year roung the desired fruit can be cultivated. Harvesting the fruit can also be performed under optimum conditions, whilst a further advantage of the proposed method resides in the fact that the fruit does not come into contact with the soil so that soiling of the fruit by sticking earth is avoided.

The grower is, moreover, independent of suitable horticultural soil so that the plants can be cultivated always in the neighbourhood of the clients so that transport of the fruit over large distances can be dispensed with.

A further important advantage of the method embodying the invention is that the plants and/or the fruit can be illuminated both from above and below and, if required, from the side with the aid of one or more light sources.

The figures used in the claims are only meant to explain more clearly the intention of the invention and are not supposed to be any restriction concerning the interpretation of the invention.

-1-

CLAIMS

1.        A method of growing plants  in closed spaces in which the plants are arranged in superposed layers and  are exposed to artificial light sources characterized in that the root balls or tubers of the fruit-bearing plants are supported in holders containing a natural or artificial nutrient source, the disposition of the. holders being such that the branches of the plants are guided at the side of the holders and at least substantially in a horizontal direction along guide members.

2.  .     A method as claimed in Claim 1 characterized in that after a given period of growth of a plant a younger plat is placed near the former and the older plant.

3.        A method as claimed in anyone of the preceding Claims characterized in that the plants are first cultivated to a given growth in closely adjacent holders, after which the holders are connected with the guide members and the holders provided with guide members are disposed side by side in a plurality of superposed layers with guide members extending parallel to one another.

4.        A method as claimed in anyone of the preceding Claims characterized in that the distance between the holders is controlled in a horizontal direction during the growth of the plants in dependence upon the growth of the plants.

5. A device for carrying out the method claimed in anyone of the preceding Claims comprising a stand in which light sources are arranged at equal intervals one above the other characterized in that at different levels in the stand are arranged carriers forming an open structure, each of which is connected with at least one holder for receiving a plant.

6. A device as claimed in Claim 5 characterized in that a holder is fastened to the end of a carrier which is provided, viewed in the direction of length of the carrier, with equidistant, upwardly directed extensions.

7. A device as claimed in anyone of Claims 5 or 6 characterized in that a carrier is provided with a plurality of relatively spaced holders.

8. A device as claimed in Claim 7 characterized in that the distance between the holders is adjustable.

9. A device as claimed in anyone of the preceding Claims 5 to 8 characterized in that a holder is releasably connected with the carrier.

FIG. 3.

FIG. I.

FIG. 2.

FIG. 4.

0093459

European Patent
Office

**EUROPEAN SEARCH REPORT**

**0093459**

Application number

EP 83 20 0347

## DOCUMENTS CONSIDERED TO BE RELEVANT

| Category | Citation of document with indication, where appropriate, of relevant passages | Relevant to claim | CLASSIFICATION OF THE APPLICATION (Int. Cl ³) |
|---|---|---|---|
| X | US-A-4 255 896 (CARL) <br><br> * Column 3, line 58 - column 5, line 26; figures 1,2,3 * | 1,5,7, 9 | A 01 G 9/14 <br> A 01 G 31/02 |
| X | US-A-3 053 011 (SILVERMAN) <br><br> * Column 3, line 44 - column 7, line 54; figures 1-15 * | 1,5-7, 9 | |
| A | GB-A-2 026 831 (GENERAL MILLS INC.) <br> * Page 3, lines 80-125; figures 1,2 * | 4,8 | |

-----

TECHNICAL FIELDS
SEARCHED (Int. Cl ³)

A 01 G

The present search report has been drawn up for all claims

| Place of search <br> THE HAGUE | Date of completion of the search <br> 27-06-1983 | Examiner <br> HERYGERS J.J. |
|---|---|---|